# EUROPEAN PATENT APPLICATION

(11) **EP 2 927 282 A1**
(43) Date of publication of application: **07.10.2015**
(21) Application number: 13859743.0
(22) Date of filing: 05.11.2013
(51) Int. Cl.: C08L 101/00, C08K 5/04, C08L 81/06, B01D 71/68

(54) **POLYMER RESIN COMPOSITION FOR PRODUCING MICROFILTRATION MEMBRANE OR ULTRAFILTRATION MEMBRANE, PRODUCTION METHOD FOR POLYMER FILTRATION MEMBRANE, AND POLYMER FILTRATION MEMBRANE**

(30) Priority: 03.12.2012 KR 20120139076
(71) Applicant: Lotte Chemical Corporation, Seoul 156-711 (KR)
(72) Inventor: BAE, Su Gyeong, Daejeon 305-720 (KR); LEE, Kwan Soo, Daejeon 305-720 (KR); LEE, Jin Won, Daejeon 305-720 (KR); JANG, Jung Hwa, Daejeon 305-720 (KR)
(74) Representative: Kling, Simone
(86) International application number: PCT/KR2013/009956
(87) International publication number: WO 2014/088214

(57) **Abstract**

This disclosure relates to a polymer resin composition for preparing a microfilter membrane or an ultrafilter membrane, a method for preparing a polymer filter membrane using the polymer resin composition, and a polymer filter membrane prepared by the method. The polymer resin composition according to the present invention can provide a microporous membrane that includes more uniformly distributed micropores and exhibits high water permeability.

## Description

### [TECHNICAL FIELD]

The present invention relates to a polymer resin composition that can be suitably used for the preparation of a microfilter membrane or an ultrafilter membrane, a method for preparing a polymer filter membrane using the same, and a polymer filter membrane prepared by the method.

### [BACKGROUND OF ART]

A polymer filter membrane is used for the separation of a liquid or gas in various fields including pharmaceuticals, semiconductors, batteries, biotechnology, diary products, beverages and foods, water treatment, and the like.

The polymer filter membrane is an important factor that can determine the efficiency and economic feasibility of a process in the separation process of materials, and as the polymer filter membrane, a sintered membrane that is obtained by injecting polymer particles into a mold and sintering it, a stretched membrane wherein a crystalline polymer film or hollow fiber is stretched to afford porosity, a track-etched membrane that is prepared by irradiating a polymer film and soaking it in an etching solution, a heat induced phase separation membrane that is prepared by mixing a polymer with diluents at a temperature exceeding the melting point of the polymer, or a phase separation membrane by solvent exchange that is formed by soaking a homogeneous solution including a polymer resin in a nonsolvent, and the like are known.

Currently, in order to commercially prepare a microfilter membrane or an ultrafilter membrane, solvent exchange is being predominantly used. Further, recently, nonsolvent induced phase separation wherein a polymer solution is casted and precipitated in a nonsolvent condensation tank, and vapor induced phase separation wherein a polymer solution prepared using an appropriate solvent is casted and then exposed to vapor so that the vapor is absorbed on the exposure surface are being used together.

US Patent No. 5,886,059 relates to a method for preparing an asymmetric polyethersulfone polymer filter membrane, including the steps of (1) preparing a polyethersulfone polymer solution, (2) adding a nonsolvent to the polymer solution and mixing them to prepare a dispersion, (3) exposing the dispersion to a gaseous environment, and (4) precipitating the prepared dispersion to prepare a polyethersulfone polymer filter membrane. However, according to the preparation process of a polymer filter membrane of the US patent, it is difficult to handle the polymer solution, or it is not easy to prepare a polymer filter membrane with appropriate physical properties due to the low viscosity of the polymer solution. Further, the polymer filter membrane prepared by the method of the US patent has a limitation in that uniform pore distribution or sufficient permeability cannot be secured.

US Patent No. 6,056,903 relates to a method for preparing a polyethersulfone membrane, including the steps of (1) preparing a polymer solution including a polyethersulfone polymer, a solvent, and a lower aliphatic glycol, (2) forming a polymer solution membrane on a support, (3) exposing the coated support to atmospheric conditions, (4) precipitating the exposed coated support in a precipitation tank containing a lower aliphatic glycol and water to prepare a polyethersulfone membrane, and (5) washing and drying the polyethersulfone membrane. However, in case a lower aliphatic glycol is used and the nature of the solvent in the precipitation tank is changed to use nonsolvent induced phase separation as described in the US Patent, it may not be easy to form pores, the distribution of the formed pores may not be uniform, or it may be difficult for the polymer membrane to have sufficient permeation flux.

In addition, Park, H.C. et al. (Journal of Membrane Science / 1999, pages: 169-178) disclose a method for preparing a polymer filter membrane using a vapor induced phase separation process and a nonsolvent induced phase separation process, but even if the two processes are simultaneously used, there is a limitation in uniformly in forming pores with an appropriate size or securing high permeation flux.

Meanwhile, in order to control the size or shape of the pores existing in a microfilter membrane or an ultrafilter membrane, various additives are used in the preparation process, and in case hydrophilic additives are included in the additives to prepare a separation membrane, water permeability of the separation membrane may be improved, and adsorption of pollutants on the surface of the separation membrane, i.e., fouling, may be reduced. However, the hydrophilic additives have high affinity with water and are mostly dissolved in water. Further, in the practical operation process of a microfilter membrane or an ultrafilter membrane, hydrophilic additives are dissolved in water, and thus a water permeability improvement effect or antifouling effect resulting from the use of the additives may be reduced as the operation time passes, and finally, the membrane loses its separation function due to the adsorption of pollution sources, thus causing life-shortening.

Japanese Patent Laid-Open Publication Hei No. 7-185280, Japanese Patent Laid-Open Publication No. 2002-01824, and Korean Patent Laid-Open Publication No. 2009-0034976 discloses various polymer additives, but these additives are not easy to produce, or there is a limitation in securing high water permeability when applied to a practical polymer filter membrane.

### [PRIOR ARY LITERATURE]

### [Patent Document]

(Patent Document 0001) US Patent No. 5,886,059
(Patent Document 0002) US Patent No. 6,056,903
(Patent Document 0003) Japanese Laid-Open Patent No. Hei 7-185280
(Patent Document 0004) Japanese Laid-Open Patent No.2002-018245
(Patent Document 0005) Korean Laid-Open Patent No.2009-0034976

### [Non-Patent Document]

Park, H.C. et al. (Journal of Membrane Science / 1999, pages: 169-178)

### [DETAILED DESCRIPTION OF THE INVENTION]

### [Technical Problem]

It is an object of the invention to provide a polymer resin composition that can provide a microporous membrane including more uniformly distributed micropores and exhibiting high water permeability.

It is another object of the invention to provide a method for preparing a polymer filter membrane exhibiting excellent mechanical properties and filtration performance using the polymer resin composition, and a polymer filter membrane prepared by the method.

### [Technical Solution]

According to the present invention, a polymer resin composition for preparing a microfilter membrane or ultrafilter membrane is provided, including:
a polymer base resin;
a compound represented by the following Chemical Formula 1; and
an organic solvent.

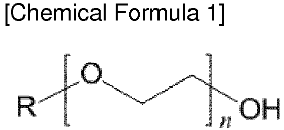

In Chemical Formula 1, R is an alkyl group having a carbon number of 1 to 20, and n is an integer of 1 to 50.

According to another embodiment of the invention, a method for preparing a polymer filter membrane is provided, including the steps of: coating the polymer resin composition for preparing a microfilter membrane or an ultrafilter membrane on a substrate; conducting vapor induced phase separation by exposing the polymer resin composition coated on the substrate to the air with relative humidity of 10 % to 100 %; and conducting nonsolvent-induced phase separation by precipitating the product of the vapor induced phase separation in a nonsolvent.

According to yet another embodiment of the invention, a polymer filter membrane that is prepared by the above preparation method, includes a polymer base resin and a compound represented by Chemical Formula 1, and includes a plurality of pores with a maximum diameter of 0.1 nm to 10 *µ*m is provided.

Hereinafter, a polymer resin composition for preparing a microfilter membrane or an ultrafilter membrane, a method for preparing a polymer filter membrane, and a polymer filter membrane according to specific embodiments of the invention will be explained in detail.

Unless explicitly described herein, technical terms are only to mention specific embodiments, and are not intended to limit the invention.

Singular forms used herein include the plural forms unless they have explicitly opposite meanings.

The meaning of 'including' used herein embodies a specific property, area, integer, step, operation, element, or component, and does not exclude the addition of other specific properties, areas, integers, steps, operations, elements, or components.

According to one embodiment of the invention, a polymer resin composition for preparing a microfilter membrane or ultrafilter membrane is provided, including:
a polymer base resin;
a compound represented by the following Chemical Formula 1; and
an organic solvent.

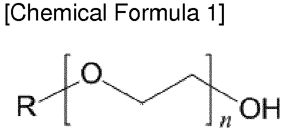

In Chemical Formula 1, R is an alkyl group having a carbon number of 1 to 20, and n is an integer of 1 to 50.

During repeated studies on a polymer filter membrane, the inventors confirmed that in case a polymer resin composition including a compound represented by Chemical Formula 1 is used, a microporous membrane that includes more uniformly distributed micropores and exhibits high water permeability can be provided, and completed the invention.

Particularly, since the compound represented by Chemical Formula 1 may act as a nonionic surfactant having amphiphilicity, if a polymer resin composition including the same is used, a polymer filter membrane wherein pores with appropriately controlled shape and size are more uniformly formed on the surface and the inside thereof may be obtained.

According to the present invention, the compound represented by Chemical Formula 1 may include at least one selected from the group consisting of 2-(methoxy)ethanol, 2-(ethoxy)ethanol, lauryl alcohol ethoxylate, 2-(hexadecyloxy)ethanol, and methoxy polyethylene glycol.

Particularly, the compound represented by Chemical Formula 1 may have a molecular weight (weight average molecular weight for a polymer) of 200 to 5000, preferably 200 to 3500, and more preferably 200 to 2500.

Specifically, if the molecular weight of the compound represented by Chemical Formula 1 is too small, it may get tangled with other components included in the polymer resin composition (for example, a polymer base resin as described below, and the like) or the reaction degree may become low, and thus mechanical properties of the prepared filter membrane may be lowered, or the effect of securing micropores required in the present invention may not be sufficiently manifested. Further, if the molecular weight of the compound represented by Chemical Formula 1 is too high, the solubility of the polymer resin composition including the same may be lowered, and it may not be easy to prepare a filter membrane having appropriate physical properties required in the present invention. Thus, it may be advantageous for the molecular weight of the compound represented by Chemical Formula 1 to be controlled within the above-explained range.

Particularly, according to the present invention, it may be more advantageous in terms of manifestation of the above-explained effects for the compound represented by Chemical Formula 1 to be lauryl alcohol ethoxylate, methoxy polyethylene glycol, or a mixture thereof, satisfying the above-explained molecular weight range.

The compound represented by Chemical Formula 1 may be included in the content of 0.1 to 50 wt%, preferably 0.1 to 40 wt%, and more preferably 1 to 30 wt%, based on the total weight of the composition. That is, in order to sufficiently manifest the effect resulting from the addition of the compound represented by Chemical Formula 1, and considering difficulty in controlling the pore shape and distribution that can be generated when an excessive amount of the compound is added, it may be advantageous for the content of the compound represented by Chemical Formula 1 to be controlled within the above-explained range.

The polymer resin composition according to the present invention may include a polymer base resin. The polymer base resin forms a backbone of the filter membrane prepared from the resin composition, and becomes a place where pores form.

As the polymer base resin, common polymer resins applied for a microfilter membrane or an ultrafilter membrane in the technical field to which the invention pertains may be used without specific limitations. However, according to the present invention the polymer base resin may be polyethersulfone (PES), a cellulose polymer, a polyamide polymer, polysulfone (PSF), polyetherketone (PEK), polyetheretherketone (PEEK), polyvinylidene fluoride (PVDF), polytetrafluoroethylene (PTFE), polyvinylchloride (PVC), polyvinylidene chloride (PVDC), or a mixture thereof.

The polyethersulfone (PES), polysulfone (PSF), polyetherketone (PEK), or polyetheretherketone (PEEK) that can be used as the polymer base resin may have a weight average molecular weight of 5000 to 200,000. Further, the polyvinylidene fluoride (PVDF), polytetrafluoroethylene (PTFE), polyvinylchloride (PVC), or polyvinylidene chloride (PVDC) may have a weight average molecular weight of 50,000 to 2,000,000. In addition, the polyamide polymer may have a relative viscosity (based on a 96 % sulfuric acid solution) of 2.0 to 4.0, and the cellulose polymer may have a weight average molecular weight of 10,000 to 5,000,000.

The polymer base resin may be included in the content of 1 to 70 wt%, preferably 1 to 50 wt%, and more preferably 5 to 40 wt%, based on the total weight of the composition. That is, in order to secure mechanical properties of the polymer filter membrane prepared using the polymer resin composition of the present invention, and considering difficulty in controlling the pore shape and distribution that can be generated when an excessive amount of the polymer base resin is added, it may be advantageous for the content of the polymer base resin to be controlled within the above-explained range.

Meanwhile, the polymer resin composition according to the present invention may include an organic solvent. The organic solvent affords appropriate viscosity to the polymer resin composition, and allows the polymer base resin and the compound represented by Chemical Formula 1 to be sufficiently dissolved and mixed.

The organic solvent may include at least one selected from the group consisting of dimethylacetamide (DMAc), N-methyl-2-pyrrolidinone (NMP), N-octyl-pyrrolidinone, N-phenyl-pyrrolidinone, dimethyl sulfoxide (DMSO), sulfolane, catechol, ethyl lactate, acetone, ethyl acetate, butyl carbitol, monoethanolamine, butyrolactone, diglycolamine, γ-butyrolactone, tetrahydrofuran (THF), methyl formate, diethylether, ethyl benzoate, acetonitrile, ethylene glycol, glycerol, dioxane, methyl carbitol, monoethanolamine, pyridine, propylene carbonate, toluene, decane, hexane, xylenes, cyclohexane, 1H,1H,9H-perfluoro-1-nonanol, perfluoro-1,2-dimethylcyclobutane, perfluoro-1,2-dimethylcyclohexane, perfluorohexane(s), and a mixture thereof.

The organic solvent may be included in the content of 10 to 95 wt%, preferably 20 to 95 wt%, more preferably 30 to 90 wt%, based on the total weight of the composition. That is, in order to allow the polymer base resin and the compound of Chemical Formula 1 included in the polymer resin composition to be sufficiently dissolved and mixed, and to afford appropriate viscosity required for the preparation of a polymer filter membrane, and considering difficulty in control of pore shape and distribution that can be generated when an excessive amount of the organic solvent is added, it may be advantageous for the content of the organic solvent to be controlled within the above-explained range.

Meanwhile, in order to control the physical properties and the use of the prepared polymer resin composition, and the shape and the size of the pores formed on the surface of the filter membrane or inside thereof, the polymer resin composition may optionally further include additives.

The additives may include common ingredients that can achieve the above-explained objects, and non-limiting examples thereof may include polyethylene glycol, a polyoxyethylene-polyoxypropylene block copolymer, polyvinylpyrrolidone, LiCl, LiClO₄, methanol, ethanol, isopropanol, acetone, phosphoric acid, propionic acid, acetic acid, silica (SiO₂), pyridine, and poly(vinylpyridine).

The content of the additives may be controlled considering the above-explained objects, and it may be preferably included in the content of 0.1 to 90 wt%, more preferably 0.1 to 80 wt%.

According to another embodiment of the invention, a method for preparing a polymer filter membrane is provided, including the steps of:
coating the above-explained polymer resin composition for preparing a microfilter membrane or an ultrafilter membrane;
conducting vapor induced phase separation by exposing the polymer resin composition coated on the substrate to air with relative humidity of 10 % to 100 %; and
conducting nonsolvent-induced phase separation by precipitating the product of the vapor induced phase separation step in a nonsolvent.

As explained above, in case the polymer resin composition including the compound represented by Chemical Formula 1 is used, a polymer filter membrane wherein pores with appropriately controlled shape and size are formed on the surface and the inside thereof may be provided.

Specifically, after coating the polymer resin composition for preparing a microfilter membrane or an ultrafilter membrane including a polymer base resin, a compound represented by Chemical Formula 1, and an organic solvent on a predetermined substrate, sequential vapor induced phase separation and nonsolvent induced phase separation may afford a microfilter membrane or an ultrafilter membrane wherein micropores are uniformly distributed with high porosity.

The polymer resin composition for preparing a microfilter membrane or an ultrafilter membrane may be coated on a predetermined substrate to a thickness of 10 *µ*m to 300 *µ*m, preferably 50 *µ*m to 250 *µ*m.

In the step of coating the polymer resin composition for preparing a microfilter membrane or an ultrafilter membrane on a substrate, commonly known application or coating methods of a polymer resin may be applied without specific limitations. For example, in the step of coating the polymer resin composition, uniform coating may be progressed over the whole surface of the base using a casting knife coating apparatus which performs line spraying.

As the base, a non-woven fabric, a polyester resin, a polyethylene resin, a polypropylene resin, cellulose acetate, or a mixed (blended) resin thereof may be used. The base may have various shapes according to the specific shape or properties of a microfilter membrane or an ultrafilter membrane to be prepared, and specifically, the base may have a film-shaped, a tube-shaped, or a hollow fiber structure.

The method for preparing a polymer filter membrane may further include the step of impregnating the substrate in an organic solvent, before coating the polymer resin composition. The method for preparing a polymer filter membrane may further include the step of removing the organic solvent (impregnated solvent) from the substrate, after the impregnation step.

By impregnating the substrate in an organic solvent before coating the polymer resin composition, pores existing on the surface of the substrate or the inside thereof may be reduced, and the organic solvent may penetrate inside of the substrate to prevent a polymer resin composition layer coated on the surface of the substrate from being easily delaminated or damaged in a subsequent process. Further, if the impregnation step with the above-described organic solvent is conducted, the thickness of the polymer may be controlled according to the viscosity of the impregnation solution or the affinity between the impregnation solution and the polymer solution, the pores generated on the surface and the inside of the polymer filter membrane and the porosity may be further improved, and the surface of the polymer membrane may be formed more uniformly.

As the organic solvent that can be used in the impregnation step, C1-10 alkylene glycol, polyalkylene glycol including a repeating unit of the C1-10 alkylene glycol, 1,3-butanediol, 1,4-butanediol, 1,5-pentanediol, methylpyrrolidone, dimethylacetamide, dimethylformamide, dimethyl sulfoxide, sulfolane, a mixed solvent of glycerol and methylpyrrolidone, a mixed solvent of glycerol and dimethylacetamide, a mixed solvent of polyethylene glycol and methylpyrrolidone, and the like may be mentioned.

Meanwhile, in the vapor induced phase separation step wherein the polymer resin composition coated on the substrate is exposed to the air with relative humidity of 10 % to 100 %, the polymer resin composition coated on the substrate is exposed to moist air, thereby forming predetermined pores on the surface of the resin composition.

The vapor induced phase separation step may be conducted at relative humidity of 10 % to 100 %, preferably 50 % to 100 %, considering the process efficiency. The vapor induced phase separation step may be progressed at a temperature of 0 to 300 °C for 1 second to 10 minutes, or at a temperature of 0 to 50 °C for less than 5 minutes.

In the vapor induced phase separation step, a humidification solvent including at least one selected from the group consisting of water, polyethylene glycol (PEG) with a weight average molecular weight of 900 or less, glycerol, 1,3-butanediol, 1,4-butanediol, and 1,5-pentanediol may be used.

Meanwhile, in the nonsolvent induced phase separation step wherein the product of the vapor induced phase separation step is precipitated in a nonsolvent, the polymer resin composition coated on the substrate that has passed through the vapor induced phase separation step is precipitated in a nonsolvent to form internal pores. The nonsolvent that can be used may include methanol, ethanol, propanol, isopropanol, water, glycols, or a mixture thereof.

The nonsolvent induced phase separation step may be conducted by precipitating the product of the vapor induced phase separation step in a nonsolvent of 0 to 90 °C for 10 minutes to 24 hours.

The method for preparing a polymer filter membrane may further include the step of washing the product of the nonsolvent induced phase separation step and drying it. By washing the product of the nonsolvent induced phase separation step with a solvent that does not dissolve it, and then drying it at a certain temperature, a polymer filter membrane may be finally obtained. For the washing, acetone, methanol, ethanol, water, and the like may be used, and preferably water at 20 to 90 °C may be used. After the washing, the product may be dried at 20 to 200 °C, and preferably 40 to 100 °C, to finally obtain a microporous polymer filter membrane.

According to yet another embodiment of the invention, a polymer filter membrane that is prepared by the above-explained method, includes a polymer base resin and a compound represented by Chemical Formula 1, and has a plurality of pores with a maximum diameter of 0.1 nm to 10 *µ*m, is provided.

Since the polymer filter membrane is obtained by the preparation method using the above-explained polymer resin composition, it may have more uniformly distributed pores and exhibit high water permeability.

The polymer filter membrane may be a microfilter membrane or an ultrafilter membrane having a plurality of pores with a maximum diameter of 0.1 nm to 10 *µ*m, while having permeation flux of 100 to 700 LMH (m³/m²·h), and preferably 1000 to 500 LMH.

### [ADVANTAGEOUS EFFECTS]

The polymer resin composition according to the present invention enables provision of a polymer filter membrane that includes more uniformly distributed micropores and exhibits high water permeability. Further, the method for preparing a polymer filter membrane according to the present invention can more stably produce a polymer filter membrane having excellent physical properties by a simplified process.

### [BRIEF DESCRIPTION OF THE DRAWINGS]

Fig. 1 shows a scanning electron microscope image (a) at 2000x magnification of the surface of the polyethersulfone polymer filter membrane prepared in Example 1, and a scanning electron microscope image (b) at 5000x magnification of the cross-section of the polymer filter membrane.
Fig. 2 shows a scanning electron microscope image (a) at 2000x magnification of the surface of the polyethersulfone polymer filter membrane prepared in Example 2, and a scanning electron microscope image (b) at 5000x magnification of the cross-section of the polymer filter membrane.
Fig. 3 shows a scanning electron microscope image (a) at 2000x magnification of the surface of the polyethersulfone polymer filter membrane prepared in Example 3, and a scanning electron microscope image (b) at 5000x magnification of the cross-section of the polymer filter membrane.
Fig. 4 shows a scanning electron microscope image (a) at 2000x magnification of the surface of the polyethersulfone polymer filter membrane prepared in Example 4, and a scanning electron microscope image (b) at 5000x magnification of the cross-section of the polymer filter membrane.
Fig. 5 shows a scanning electron microscope image (a) at 2000x magnification of the surface of the polyethersulfone polymer filter membrane prepared in Example 5, and a scanning electron microscope image (b) at 5000x magnification of the cross-section of the polymer filter membrane.
Fig. 6 shows a scanning electron microscope image (a) at 2000x magnification of the surface of the polyethersulfone polymer filter membrane prepared in Example 6, and a scanning electron microscope image (b) at 5000x magnification of the cross-section of the polymer filter membrane.

### [DETAILED DESCRIPTION OF THE EMBODIMENTS]

Hereinafter, preferable examples are presented to aid in understanding of the invention. However, these examples are only to illustrate the invention, and the scope of the invention is not limited thereto.

### Example 1

About 10 wt% of polyethersulfone (weight average molecular weight: about 58,000), about 5 wt% of methoxy polyethylene glycol (weight average molecular weight: about 1200, Manufacturing Company: Lotte Chemical Corporation, Product Name: mPEG-1200), 65 wt% of methylpyrrolidone, and about 20 wt% of glycerol were mixed to prepare a polymer resin composition.

Separately, a polyester support was prepared by impregnating it in a glycerol impregnation solution for about 5 seconds and then removing remaining impregnation solvent.

Subsequently, the polymer resin composition was casted on the glycerol-impregnated polyester support while controlling the thickness with a casting knife to about 150 *µ*m, while maintaining the temperature of the polymer resin composition at about 30 °C.

The polymer resin composition casted on the polyester support was exposed to the conditions of relative humidity of about 90 % with vapor as a humidification solvent, and a temperature of about 20 °C for about 15 seconds (vapor induced phase separation step).

The polymer resin composition casted on the polyester support that passed through the vapor induced phase separation step was precipitated in a nonsolvent of water (at about 20 °C) for about 12 hours to prepare a polyethersulfone polymer filter membrane. The prepared polyethersulfone polymer filter membrane was washed with distilled water at about 70 °C for about 3 hours, and then dried in a dry oven at about 70 °C for about 24 hours.

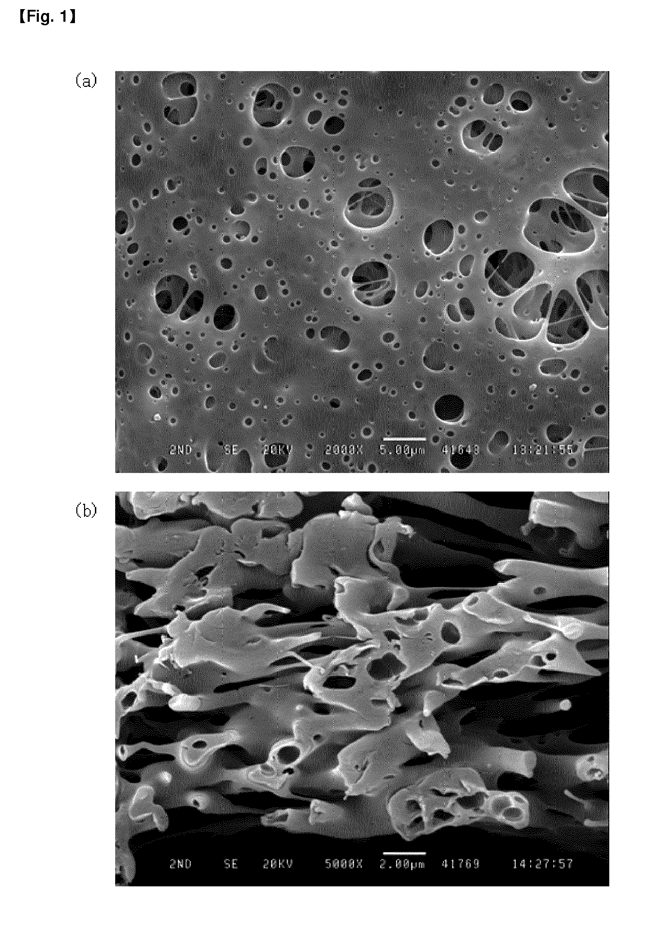

The prepared polyethersulfone was observed with a scanning electron microscope to confirm the shape, size, and distribution of the pores, and the results are shown in Fig. 1. As shown in Fig. 1, it was confirmed that pores with a size of 0.5 to 1.0 *µ*m were formed in the polyethersulfone polymer filter membrane according to Example 1.

### Example 2

About 10 wt% of polyethersulfone (weight average molecular weight: about 58,000), about 5 wt% of lauryl alcohol ethoxylate (weight average molecular weight: about 278, ethylene oxide mole number: 2, Manufacturing Company: Lotte Chemical Corporation, Product Name: LAE-2), 65 wt% of methylpyrrolidone, and about 20 wt% of glycerol were mixed to prepare a polymer resin composition.

Separately, a polyester support was prepared by impregnating it in a glycerol impregnation solution for about 5 seconds and then removing remaining impregnation solvent.

Subsequently, the polymer resin composition was casted on the glycerol-impregnated polyester support while controlling the thickness with a casting knife to about 150 *µ*m, while maintaining the temperature of the polymer resin composition at about 30 °C.

The polymer resin composition casted on the polyester support was exposed to the conditions of relative humidity of about 90 % with vapor as a humidification solvent, and a temperature of about 20 °C for about 15 seconds (vapor induced phase separation step).

The polymer resin composition casted on the polyester support that passed through the vapor induced phase separation step was precipitated in a nonsolvent of water (at about 20 °C) for about 12 hours to prepare a polyethersulfone polymer filter membrane. The prepared polyethersulfone polymer filter membrane was washed with distilled water at about 70 °C for about 3 hours, and then dried in a dry oven at about 70 °C for about 24 hours.

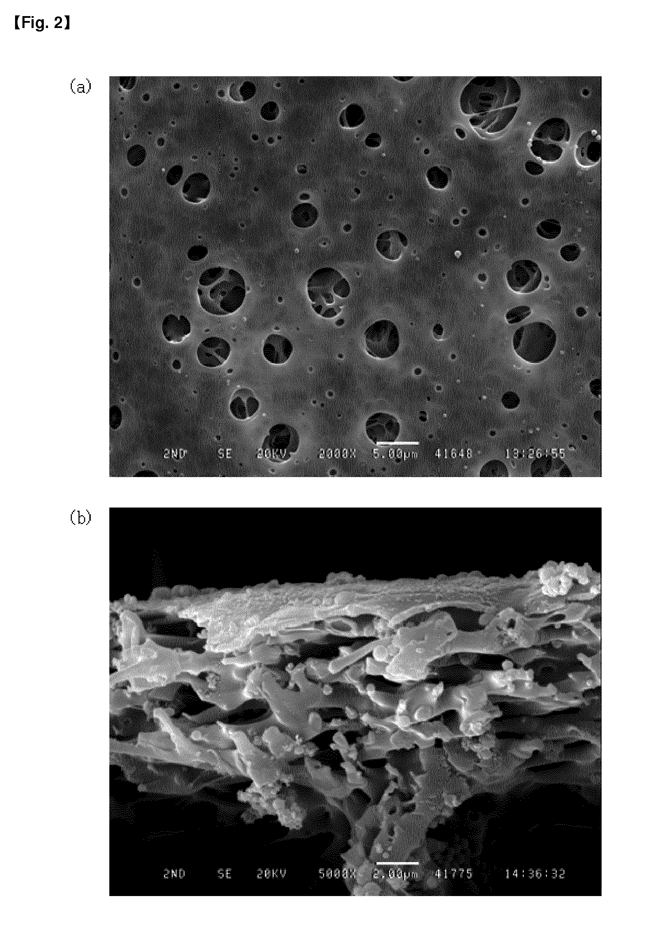

The prepared polyethersulfone was observed with a scanning electron microscope to confirm the shape, size, and distribution of the pores, and the results are shown in Fig. 2. As shown in Fig. 2, it was confirmed that pores with a size of 0.1 to 0.5 *µ*m were formed in the polyetheresulfone polymer filter membrane according to Example 2.

### Example 3

About 10 wt% of polyethersulfone (weight average molecular weight: about 58,000), about 5 wt% of lauryl alcohol ethoxylate (weight average molecular weight: about 278, ethylene oxide mole number: 15, Manufacturing Company: Lotte Chemical Corporation, Product Name: LAE-15), 65 wt% of methylpyrrolidone, and about 20 wt% of glycerol were mixed to prepare a polymer resin composition.

Separately, a polyester support was prepared by impregnating it in a glycerol impregnation solution for about 5 seconds and then removing remaining impregnation solvent.

Subsequently, the polymer resin composition was casted on the glycerol-impregnated polyester support while controlling the thickness with a casting knife to about 150 *µ*m, while maintaining the temperature of the polymer resin composition at about 30 °C.

The polymer resin composition casted on the polyester support was exposed to the conditions of relative humidity of about 90 % with vapor as a humidification solvent, and a temperature of about 20 °C for about 15 seconds (vapor induced phase separation step).

The polymer resin composition casted on the polyester support that passed through the vapor induced phase separation step was precipitated in a nonsolvent of water (at about 20 °C) for about 12 hours to prepare a polyethersulfone polymer filter membrane. The prepared polyethersulfone polymer filter membrane was washed with distilled water at about 70 °C for about 3 hours, and then dried in a dry oven at about 70 °C for about 24 hours.

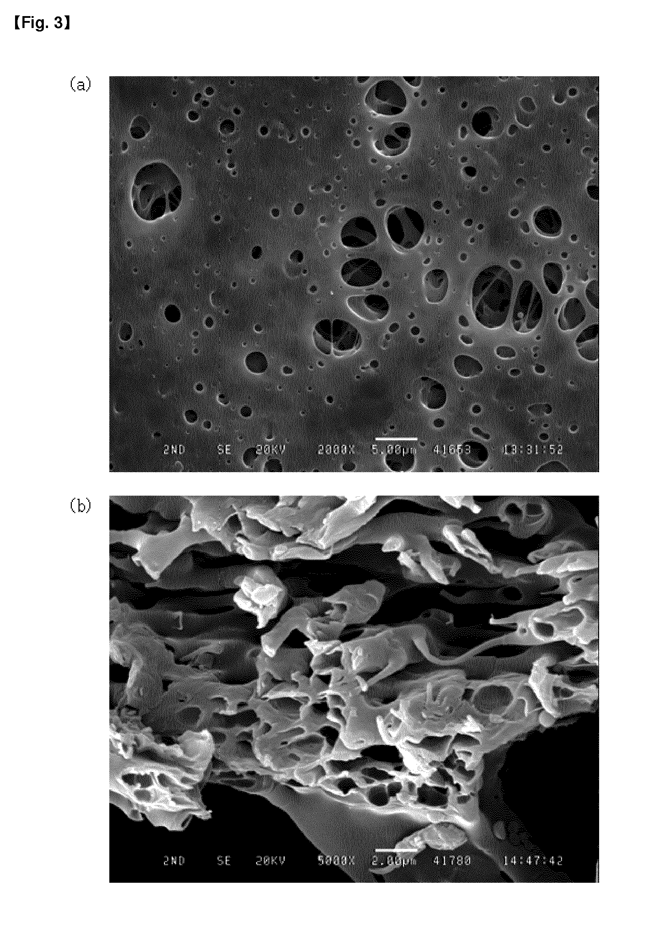

The prepared polyethersulfone was observed with a scanning electron microscope to confirm the shape, size, and distribution of the pores, and the results are shown in Fig. 3. As shown in Fig. 3, it was confirmed that pores with a size of 0.4 to 1.0 *µ*m were formed in the polyetheresulfone polymer filter membrane according to Example 3.

### Example 4

About 12 wt% of polyethersulfone (weight average molecular weight: about 58,000), about 3 wt% of methoxy polyethylene glycol (weight average molecular weight: about 1200, Manufacturing Company: Lotte Chemical Corporation, Product Name: mPEG-1200), 65 wt% of methylpyrrolidone, and about 20 wt% of glycerol were mixed to prepare a polymer resin composition.

Separately, a polyester support was prepared by impregnating it in a glycerol impregnation solution for about 5 seconds and then removing remaining impregnation solvent.

Subsequently, the polymer resin composition was casted on the glycerol-impregnated polyester support while controlling the thickness with a casting knife to about 150 *µ*m, while maintaining the temperature of the polymer resin composition at about 30 °C.

The polymer resin composition casted on the polyester support was exposed to the conditions of relative humidity of about 90 % with vapor as a humidification solvent, and a temperature of about 20 °C for about 15 seconds (vapor induced phase separation step).

The polymer resin composition casted on the polyester support that passed through the vapor induced phase separation step was precipitated in a nonsolvent of water (at about 20 °C) for about 12 hours to prepare a polyethersulfone polymer filter membrane. The prepared polyethersulfone polymer filter membrane was washed with distilled water at about 70 °C for about 3 hours, and then dried in a dry oven at about 70 °C for about 24 hours.

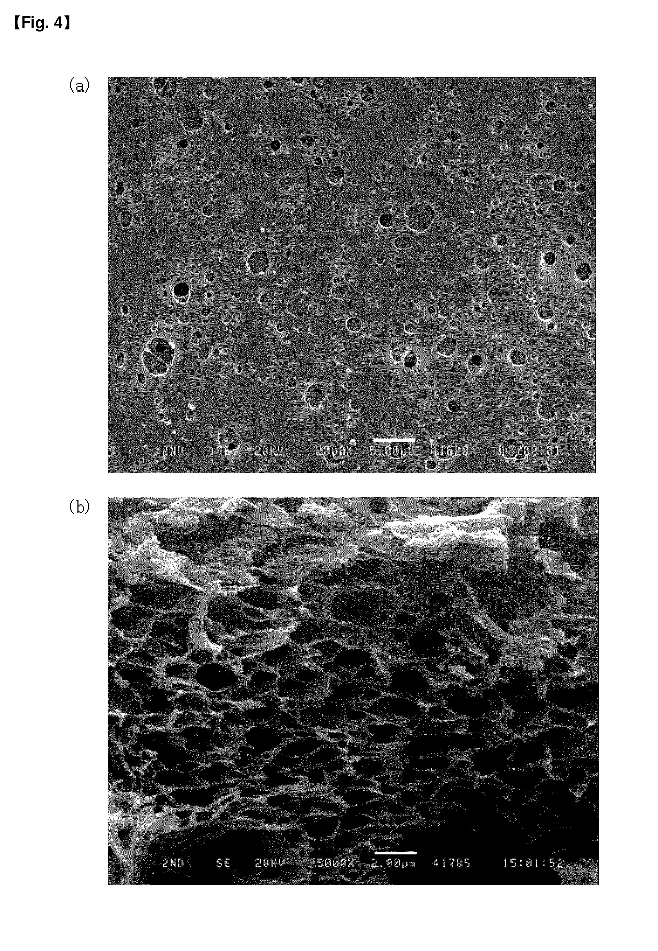

The prepared polyethersulfone was observed with a scanning electron microscope to confirm the shape, size, and distribution of the pores, and the results are shown in Fig. 4. As shown in Fig. 4, it was confirmed that pores with a size of 0.1 to 0.4 *µ*m were formed in the polyetheresulfone polymer filter membrane according to Example 4.

### Example 5

About 12 wt% of polyethersulfone (weight average molecular weight: about 58,000), about 3 wt% of lauryl alcohol ethoxylate (weight average molecular weight: about 278, ethylene oxide mole number: 2, Manufacturing Company: Lotte Chemical Corporation, Product Name: LAE-2), 65 wt% of methylpyrrolidone, and about 20 wt% of glycerol were mixed to prepare a polymer resin composition.

Separately, a polyester support was prepared by impregnating it in a glycerol impregnation solution for about 5 seconds and then removing remaining impregnation solvent.

Subsequently, the polymer resin composition was casted on the glycerol-impregnated polyester support while controlling the thickness with a casting knife to about 150 *µ*m, while maintaining the temperature of the polymer resin composition at about 30 °C.

The polymer resin composition casted on the polyester support was exposed to the conditions of relative humidity of about 90 % with vapor as a humidification solvent, and a temperature of about 20 °C for about 15 seconds (vapor induced phase separation step).

The polymer resin composition casted on the polyester support that passed through the vapor induced phase separation step was precipitated in a nonsolvent of water (at about 20 °C) for about 12 hours to prepare a polyethersulfone polymer filter membrane. The prepared polyethersulfone polymer filter membrane was washed with distilled water at about 70 °C for about 3 hours, and then dried in a dry oven at about 70 °C for about 24 hours.

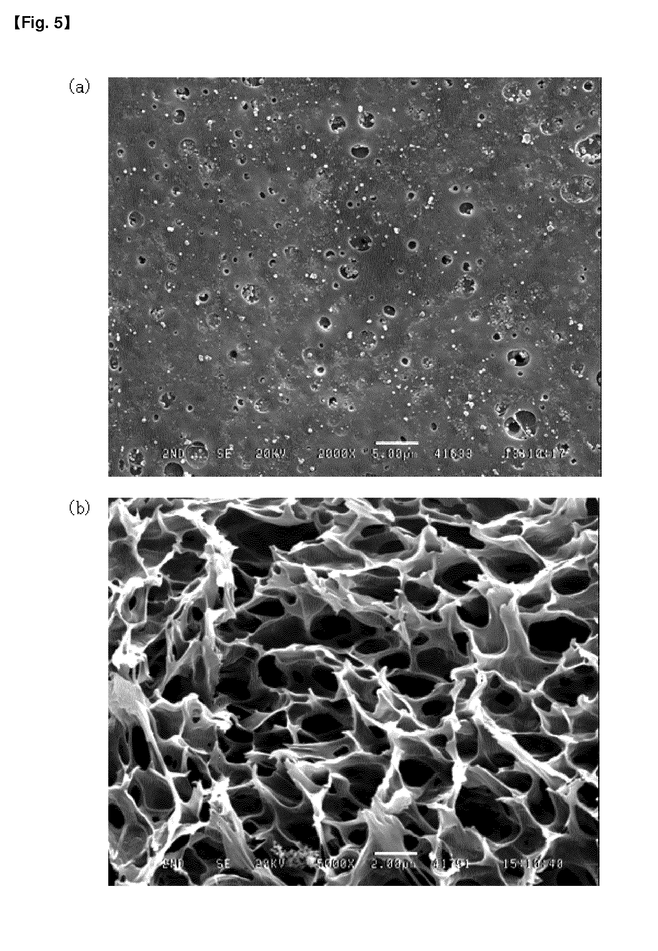

The prepared polyethersulfone was observed with a scanning electron microscope to confirm the shape, size, and distribution of the pores, and the results are shown in Fig. 5. As shown in Fig. 5, it was confirmed that pores with a size of 0.1 to 0.5 *µ*m were formed in the polyetheresulfone polymer filter membrane according to Example 5.

### Example 6

About 12 wt% of polyethersulfone (weight average molecular weight: about 58,000), about 3 wt% of lauryl alcohol ethoxylate (weight average molecular weight: about 278, ethylene oxide mole number: 15, Manufacturing Company: Lotte Chemical Corporation, Product Name: LAE-15), 65 wt% of methylpyrrolidone, and about 20 wt% of glycerol were mixed to prepare a polymer resin composition.

Separately, a polyester support was prepared by impregnating it in a glycerol impregnation solution for about 5 seconds and then removing remaining impregnation solvent.

Subsequently, the polymer resin composition was casted on the glycerol-impregnated polyester support while controlling the thickness with a casting knife to about 150 *µ*m, while maintaining the temperature of the polymer resin composition at about 30 °C.

The polymer resin composition casted on the polyester support was exposed to the conditions of relative humidity of about 90 % with vapor as a humidification solvent, and a temperature of about 20 °C for about 15 seconds (vapor induced phase separation step).

The polymer resin composition casted on the polyester support that passed through the vapor induced phase separation step was precipitated in a nonsolvent of water (at about 20 °C) for about 12 hours to prepare a polyethersulfone polymer filter membrane. The prepared polyethersulfone polymer filter membrane was washed with distilled water at about 70 °C for about 3 hours, and then dried in a dry oven at about 70 °C for about 24 hours.

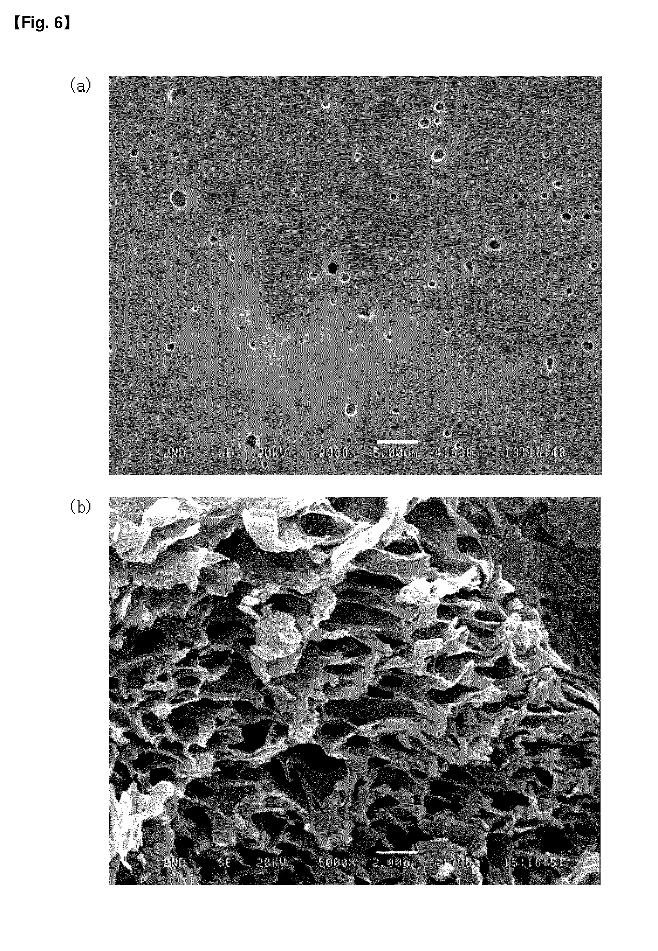

The prepared polyethersulfone was observed with a scanning electron microscope to confirm the shape, size, and distribution of the pores, and the results are shown in Fig. 6. As shown in Fig. 6, it was confirmed that pores with a size of 0.1 to 0.5 *µ*m were formed in the polyetheresulfone polymer filter membrane according to Example 6.

### Experimental Example

For each polyethersulfone polymer filter membrane obtained in Examples 1 to 6, average pore size and distribution were measured with an automated porometer (CFP-1200AEL) using a bubble point method.

The mean value of permeation flux (LMH, m³/m²·h) of the polyethersulfone polymer filter membrane was measured under a 0.1 bar vacuum condition using a circular porous plate with a diameter of 40 mm.

The measured pore size and permeation flux are respectively shown in the following Table 1.

**[Table 1]**

| | Example 1 | Example 2 | Example 3 | Example 4 | Example 5 | Example 6 |
|---|---|---|---|---|---|---|
| Average pore size (*µ*m) | 0.54 | 0.41 | 0.51 | 0.42 | 0.45 | 0.44 |
| Permeation flux (LMH) | 340 | 282 | 392 | 329 | 111 | 209 |

As can be seen from the Table 1, it was confirmed that the polymer filter membranes according to Examples 1 to 6 have a plurality of pores having an average pore size of less than 1 *µ*m, preferably about 0.4 to 0.6 *µ*m, and exhibit permeation flux of about 100 to 400 LMH, and thus can be effectively applied for a microfilter membrane or an ultrafilter membrane, and the like.

## Claims

1. A polymer resin composition for preparing a microfilter membrane or an ultrafilter membrane, comprising:
a polymer base resin;
a compound represented by the following Chemical Formula 1; and
an organic solvent: 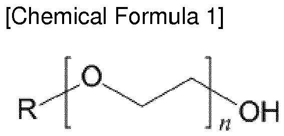
in Chemical Formula 1, R is an alkyl group having a carbon number of 1 to 20, and n is an integer of 1 to 50.

2. The polymer resin composition according to claim 1, wherein the compound represented by Chemical Formula 1 includes at least one selected from the group consisting of 2-(methoxy)ethanol, 2-(ethoxy)ethanol, lauryl alcohol ethoxylate, 2-(hexadecyloxy)ethanol, and methoxy polyethylene glycol.

3. The polymer resin composition according to claim 1, wherein the compound represented by Chemical Formula 1 has a weight average molecular weight of 200 to 5000.

4. The polymer resin composition according to claim 1, wherein the polymer base resin includes at least one selected from the group consisting of polyethersulfone (PES), a cellulose polymer, a polyamide polymer, polysulfone (PSF), polyetherketone (PEK), polyetheretherketone (PEEK), polyvinylidene fluoride (PVDF), polytetrafluoroethylene (PTFE), polyvinylchloride (PVC), and polyvinylidene chloride (PVDC).

5. The polymer resin composition according to claim 1, wherein the organic solvent includes at least one selected from the group consisting of dimethylacetamide (DMAc), N-methyl-2-pyrrolidinone (NMP), N-octyl-pyrrolidinone, N-phenyl-pyrrolidinone, dimethyl sulfoxide (DMSO), sulfolane, catechol, ethyl lactate, acetone, ethyl acetate, butyl carbitol, monoethanolamine, butyrolactone, diglycolamine, γ-butyrolactone, tetrahydrofuran (THF), methyl formate, diethylether, ethyl benzoate, acetonitrile, ethylene glycol, glycerol, dioxane, methyl carbitol, monoethanolamine, pyridine, propylene carbonate, toluene, decane, hexane, xylenes, cyclohexane, 1H,1H,9H-perfluoro-1-nonanol, perfluoro-1,2-dimethylcyclobutane, perfluoro-1,2-dimethylcyclohexane, perfluorohexane(s), and a mixture thereof.

6. The polymer resin composition according to claim 1, wherein the polymer resin composition comprises 1 to 70 wt% of the polymer base resin, 0.1 to 50 wt% of the compound represented by Chemical Formula 1, and 10 to 95 wt% of the organic solvent.

7. The polymer resin composition according to claim 1, further comprising at least one additive selected from the group consisting of polyethylene glycol, polyoxyethylene-polyoxypropylene block copolymer, polyvinylpyrrolidone, LiCl, LiClO₄, methanol, ethanol, isopropanol, acetone, phosphoric acid, propionic acid, acetic acid, silica(SiO₂), pyridine, and poly(vinylpyridine).

8. A method for preparing a polymer filter membrane comprising the steps of:
coating the polymer resin composition for preparing a microfilter membrane or an ultrafilter membrane according to claim 1 on a substrate;
conducting vapor induced phase separation by exposing the polymer resin composition coated on the substrate to air with relative humidity of 10 % to 100 %; and
conducting nonsolvent-induced phase separation by precipitating the product of the vapor induced phase separation in a nonsolvent.

9. The method for preparing a polymer filter membrane according to claim 8, wherein the polymer resin composition coated on the substrate has a thickness of 10 *µ*m to 300 *µ*m.

10. The method for preparing a polymer filter membrane according to claim 8, wherein the substrate includes at least one selected from the group consisting of non-woven fabric, a polyester resin, a polyethylene resin, a polypropylene resin, cellulose acetate, or a blended resin thereof, and
the polymer filter membrane has a film-shaped, a tube-shaped, or a hollow fiber structure.

11. The method for preparing a polymer filter membrane according to claim 8, further comprising the step of impregnating the substrate in the organic solvent, before coating the polymer resin composition.

12. The method for preparing a polymer filter membrane according to claim 8, wherein the step of vapor induced phase separation is progressed at a temperature of 0 to 300 °C for 1 second to 10 minutes.

13. The method for preparing a polymer filter membrane according to claim 8, wherein the vapor induced phase separation is conducted using a humidification solvent including at least one selected from the group consisting of water, polyethylene glycol (PEG) with a weight average molecular weight of 900 or less, glycerol, 1,3-butanediol, 1,4-butanediol, and 1,5-pentanediol.

14. The method for preparing a polymer filter membrane according to claim 8, wherein the nonsolvent induced phase separation is conducted by precipitating the product of the vapor induced phase separation in a nonsolvent at 0 to 90 °C for 10 minutes to 24 hours.

15. The method for preparing a polymer filter membrane according to claim 8, further comprising the step of washing the product of the nonsolvent induced phase separation and drying it.

16. The method for preparing a polymer filter membrane according to claim 8, wherein the polymer filter membrane is a microfilter membrane or an ultrafilter membrane.

17. A polymer filter membrane prepared by the method of claim 8, which comprises a polymer base resin and a compound represented by the following Chemical Formula 1, and includes a plurality of pores having a maximum diameter of 0.1 nm to 10 *µ*m: 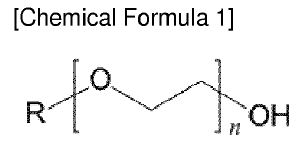
in Chemical Formula 1, R is an alkyl group having a carbon number of 1 to 20, and n is an integer of 1 to 50.

18. The polymer filter membrane according to claim 17, wherein the polymer filter membrane has a permeation flux of 100 to 700 LMH (m³/m²·h).
